# EUROPÄISCHE PATENTSCHRIFT

(11) **EP 2 634 973 B1**
(45) Veröffentlichungstag und Bekanntmachung des Hinweises auf die Patenterteilung: **01.10.2014**
(21) Anmeldenummer: 12157499.0
(22) Anmeldetag: 29.02.2012
(51) Int. Cl.: H04L 12/40

(54) **Kommunikationsgerät für ein redundant betreibbares industrielles Kommunikationsnetz und Verfahren zum Betrieb eines Kommunikationsgeräts**
Communication device for a redundant industrial communication network and method for operating a communication device
Appareil de communication pour un réseau de communication industriel fonctionnant de manière redondante et procédé de fonctionnement d'un appareil de communication

(43) Veröffentlichungstag der Anmeldung: 04.09.2013
(73) Patentinhaber: Siemens Aktiengesellschaft, 80333 München (DE)
(72) Erfinder: Angst, Hermann, 76199 Karlsruhe (DE); Lohmeyer, Joachim, 91161 Hilpoltstein (DE)

(56) Entgegenhaltungen:
- EP-A1- 2 204 952
- EP-A2- 1 416 671
- US-B1- 7 209 453

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden, da dies innerhalb eines industriellen Automatisierungssystems zu inkonsistenten Systemzuständen und Systemausfällen mit wirtschaftlich gravierenden Stillstandszeiten führen kann.

Zusätzlich können Unterbrechungen von Kommunikationsverbindungen zwischen Rechnereinheiten eines industriellen Automatisierungssystems zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie High-availability Seamless Redundancy oder Parallel Redundancy Protocol, für hochverfügbare, redundant betreibbare in industriellen Kommunikationsnetze entwickelt worden. High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jedes Datenpaket von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Datenpakete aus einem empfangenen Datenstrom ausgefiltert.

In DE 10 2008 017 192 A1 ist ein Verfahren zum Aufbau eines Netzwerks beschrieben, das einen ersten Netzwerkteilnehmer mit einem Satz von Ports umfaßt. Diese Ports sind mit Ports von weiteren Netzwerkteilnehmern des Netzwerks verbunden. In einem ersten Verfahrensschritt werden die dem ersten Netzwerkteilnehmer zugeordneten Ports in einen ersten Betriebsmodus geschaltet. Im ersten Betriebsmodus können über die Ports Testtelegramme empfangen und versendet werden. Entsprechend einem weiteren Verfahrensschritt werden Testtelegramme über die dem ersten Netzwerkteilnehmer zugeordneten Ports gesendet. Darüber hinaus werden die dem ersten Netzwerkteilnehmer zugeordneten Ports in einen zweiten Betriebsmodus geschaltet, falls kein Testtelegramm der gesendeten Testtelegramme wieder vom ersten Netzwerkteilnehmer empfangen wird. Im zweiten Betriebsmodus werden Telegramme, die über einen der dem ersten Netzwerkteilnehmer zugeordneten Ports empfangen werden, über die verbleibenden Ports weitergeleitet. Auf diese Weise kann eine Bildung von Netzwerkschlaufen bei einem Vernetzen oder Erweitern komplexer Netzwerke vermieden werden.

Aus EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder ein leeres Datenpaket an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

In EP 2 343 857 A1 ist ein Netzwerkknoten für ein Kommunikationsnetzwerk beschrieben, das ein erstes Teilnetz und ein mit dem ersten Teilnetz verbundenes zweites Teilnetz umfaßt. Während im ersten Teilnetz eine Datenübertragung entsprechend einem Spannbaum-Protokoll erfolgt, wird zur Datenübertragung im zweiten Teilnetz ein sich vom im ersten Teilnetz verwendeten Protokoll unterscheidendes zweites Protokoll verwendet. Der in EP 2 343 857 A1 beschriebene Netzwerkknoten wird als ein Element für das zweite Teilnetz und zur Kommunikation innerhalb des zweiten Teilnetzes eingerichtet. Darüber hinaus wird der Netzwerkknoten mittels einer Spannbaum-Funktionalität als ein Spannbaum-Hauptknoten zur Kontrolle und Steuerung des zweiten Teilnetzes eingerichtet. Dadurch ist das zweite Teilnetz durch das im ersten Teilnetz verwendete Spannbaum-Protokoll als virtueller Netzknoten behandelbar.

Aus EP 2 413 538 A1 ist ein Verfahren zur redundanten Kommunikation in einem Kommunikationssystem bekannt, das mehrere Kommunikationsnetzwerke umfaßt. Die Kommunikationsnetzwerke sind über zumindest einen Kopplungsknoten miteinander verbunden. Eine Rückübertragung von Daten, die aus einem ersten Kommunikationsnetzwerk stammen, aus einem zweiten Kommunikationsnetzwerk zurück in das erste Kommunikationsnetzwerk wird auf Grund einer vor Datenübertragung definierten Information verhindert.

In US 7 209 453 B1 ist ein Verfahren zur Behandlung von Steuerungsverbindungsfehlern innerhalb eines Switches mit einem Backplane-Bussystem bekannt, bei dem in Abhängigkeit von erkannten Verbindungsfehlern Verknüpfungen zwischen Backplane-Verbindungen und Blackplane-Anschlüssen selektiv reallokiert werden.

Der vorliegenden Erfindung liegt die Aufgabe zugrunde, ein leistungsfähiges und kostengünstiges Kommunikationsgerät für ein redundant betreibbares industrielles Kommunikationsnetz und ein Verfahren zum Betrieb eines solchen Kommunikationsgeräts anzugeben.

Diese Aufgabe wird erfindungsgemäß durch ein Kommunikationsgerät mit den in Anspruch 1 angegebenen Merkmalen und durch ein Verfahren mit den in Anspruch 11 angegebenen Merkmalen gelöst. Vorteilhafte Weiterbildungen der vorliegenden Erfindung sind in den abhängigen Ansprüchen angegeben.

Das erfindungsgemäße Kommunikationsgerät für ein redundant betreibbares industrielles Kommunikationsnetz umfaßt zumindest eine erste und eine zweite Sende- und Empfangseinheit, die jeweils eine Schnittstelle für eine Netzwerkverbindung des industriellen Kommunikationsnetzes aufweisen. Dabei weisen beide Sende- und Empfangseinheiten eine identische Netzwerkadresse und einen identischen Geräteidentifikator auf. Bei dem Geräteidentifikator kann es sich beispielsweise um eine MAC-Adresse handeln. Mit der ersten und zweiten Sendeund Empfangseinheit ist eine Signalverarbeitungseinheit verbunden. Die Signalverarbeitungseinheit weist eine Multiplexereinheit zur parallelen Weiterleitung zu sendender Datenpakete an beide Sendeeinheiten und eine Redundanzbehandlungseinheit zur Verarbeitung von beiden Empfangseinheiten empfangener Datenpakete auf. Die Redundanzbehandlungseinheit umfaßt außerdem eine Filtereinheit, die für eine Detektion empfangener redundanter Datenpakete eingerichtet ist. Über ein Koppelelement ist ein einfach angebundener Netzknoten mit der Signalverarbeitungseinheit verbunden. Das Koppelelement ist vorzugsweise ein Hochgeschwindigkeitsbus, über den beispielsweise weitere einfach angebundene Netzknoten mit der Signalverarbeitungseinheit verbunden sein können. Eine Datenübertragung innerhalb des industriellen Kommunikationsnetzes kann beispielsweise entsprechend High-availability Seamless Redundancy bzw. entsprechend Parallel Redundancy Protocol erfolgen.

Darüber hinaus ist die Signalverarbeitungseinheit erfindungsgemäß über eine erste und zweite Schnittstelle mit dem Koppelelement verbunden. Dabei ist die erste Schnittstelle ausschließlich für eine Übermittlung durch die erste Empfangseinheit empfangener Datenpakete vorgesehen, während die zweite Schnittstelle ausschließlich für eine Übermittlung durch die zweite Empfangseinheit empfangener Datenpakete vorgesehen ist. Des weiteren umfaßt die Redundanzbehandlungseinheit eine Kennzeichnungseinheit, die für ein Einfügen eines Redundanzindikators in ein empfangenes redundantes Datenpaket eingerichtet ist. Dabei ist die Redundanzbehandlungseinheit für ein zwischenspeicherungsfreies Weiterleiten von durch beide Empfangseinheiten empfangenen Datenpaketen an das Koppelelement eingerichtet. Entsprechend einer bevorzugten Ausgestaltung der vorliegenden Erfindung ist der Redundanzindikator durch ein eingefügtes ungültiges Datum gebildet.

Darüber hinaus ist dem Koppelelement erfindungsgemäß eine Detektionseinheit zugeordnet, die für eine Auswertung von Redundanzindikatoren in empfangenen Datenpaketen und für ein Verwerfen von Datenpaketen mit Redundanzindikatoren eingerichtet ist. Somit erfolgt durch die Redundanzbehandlungseinheit lediglich eine Kennzeichnung redundanter Datenpakete, während ein Verwerfen Koppelelement-seitig umgesetzt wird.

Mit dem erfindungsgemäßen Kommunikationsgerät entfällt eine bisher übliche vollständige Pufferung von empfangenen Datenpaketen durch die Signalverarbeitungs- bzw. Redundanzbehandlungseinheit einschließlich Verwaltung zwischengespeicherter Datenpakete. Dies ermöglicht eine einfache und kostengünstige Realisierung der Signalverarbeitungseinheit bei geringer Leistungsaufnahme. Entsprechend einer besonders bevorzugten Weiterbildung der vorliegenden Erfindung ist die Signalverarbeitungseinheit, welche die Multiplexereinheit und die Redundanzbehandlungseinheit umfaßt, mittels eines Field Programmable Gate Arrays realisiert. Dabei ist das Koppelelement vorzugsweise ein Backplane Switch mit zugeordnetem Controller. Des weiteren kann der Backplane Switch über zumindest einen Interlink-Anschluß mit dem zumindest einen einfach angebundenen Netzknoten verbunden sein.

Zusätzlich kann das Field Programmable Gate Array (FPGA) zur Speicherung einer Tabelle (proxy node table) mit Angaben zu sämtlichen mit dem Koppelelement verbundenen einfach angebundenen Netzknoten genutzt werden. Dies ermöglicht eine einfache Verwaltung von mit dem Kommunikationsgerät verbundenen einfach angebundenen Netzknoten. Daher kann das Kommunikationsgerät als Grundlage genutzt werden, um auf einfache Weise Geräte wie HSR/PRP-Proxy oder HSR/PRP-RedBox zu realisieren. Insbesondere ist es mit der vorliegenden Erfindung bzw. ihren Ausgestaltungen möglich, HSR/PRP-Funktionalitäten in eine vom Koppelelement bzw. Backplane Switch separierte Baugruppe auszulagern, die durch die Signalverarbeitungseinheit bzw. das FPGA gebildet ist. Hierdurch können in effizienter Weise Vorschaltlösungen realisiert werden, die in einem Bedarfsfall beispielsweise als HSR/PRP-Vorschaltgerät eine Switch-Baugruppe ergänzen. Daneben können HSR/PRP-Funktionalitäten auch auf einem Medienmodul in einen modularen Ethernet-Switch für Echtzeit-Datenübermittlung integriert werden.

Entsprechend einer bevorzugten Weiterbildung des erfindungsgemäßen Kommunikationsgeräts sind zueinander redundante Datenpakete durch eine einheitliche Sequenznummer gekennzeichnet. Außerdem ist der Signalverarbeitungseinheit eine Speichereinheit zugeordnet, die für eine Speicherung von Sequenznummern bereits fehlerfrei empfangener Datenpakete eingerichtet ist. Dabei ist die Redundanzbehandlungseinheit für eine Überprüfung auf eine bereits gespeicherte Sequenznummer bei Empfang eines neuen Datenpakets eingerichtet.

Vorzugsweise ist dem Koppelelement eine Zählereinheit zugeordnet, die für eine Erfassung von fehlerfrei und von fehlerbehaftet empfangenen Datenpaketen eingerichtet ist. Des weiteren ist die Zählereinheit mit einer Auswerteeinheit verbunden. Die Auswerteeinheit ist beispielsweise für eine Signalisierung eines fehlerfreien redundanten Netzzustandes bei einer unter einem vorgebbaren Schwellwert liegenden Differenz zwischen fehlerfrei und fehlerbehaftet empfangenen Datenpaketen eingerichtet. Zusätzlich kann die Auswerteeinheit für eine Signalisierung eines Netzzustandes mit Redundanzverlust bei einer steigenden Anzahl von fehlerfrei empfangenen Datenpaketen und einer zugleich im wesentlichen stagnierenden Anzahl von fehlerbehaftet empfangenen Datenpaketen eingerichtet sein. Entsprechend einer weiteren Ausgestaltung der vorliegenden Erfindung kann die Auswerteeinheit auch für eine Signalisierung eines Netzausfalls bei einer stagnierenden Anzahl von fehlerfrei und von fehlerbehaftet empfangenen Datenpaketen eingerichtet sein. Insgesamt ermöglicht dies eine einfache Netzzustandsdiagnose durch ein Kommunikationsgerät, wie HSR/PRP-Proxy oder HSR/PRP-RedBox.

Entsprechend dem erfindungsgemäßen Verfahren zum Betrieb eines Kommunikationsgeräts in einem redundanten industriellen Kommunikationsnetz umfaßt das Kommunikationsgeräts zumindest eine ersten und eine zweite Sende- und Empfangseinheit, die jeweils eine Schnittstelle für eine Netzwerkverbindung des industriellen Kommunikationsnetzes aufweisen. Dabei weisen beide Sende- und Empfangseinheiten eine identische Netzwerkadresse und einen identischen Geräteidentifikator auf. Mit der ersten und zweiten Sende- und Empfangseinheit ist eine Signalverarbeitungseinheit verbunden, die zu sendende Datenpakete parallel an beide Sendeeinheiten weiterleitet und von den Empfangseinheiten empfangene redundante Datenpakete detektiert. Über ein Koppelelement ist ein einfach angebundener Netzknoten mit der Signalverarbeitungseinheit verbunden. Innerhalb des industriellen Kommunikationsnetzes können Datenpakete beispielsweise entsprechend High-availability Seamless Redundancy bzw. entsprechend Parallel Redundancy Protocol übertragen werden.

Die Signalverarbeitungseinheit ist entsprechend dem erfindungsgemäßen Verfahren über eine erste und zweite Schnittstelle mit dem Koppelelement verbunden. Dabei werden über die erste Schnittstelle durch die erste Empfangseinheit empfangene Datenpakete übermittelt, während über die zweite Schnittstelle durch die zweite Empfangseinheit empfangene Datenpakete übermittelt werden. Darüber hinaus fügt die Signalverarbeitungseinheit in ein empfangenes redundantes Datenpaket einen Redundanzindikator ein und leitet durch beide Empfangseinheiten empfangene Datenpakete zwischenspeicherungsfrei an das Koppelelement weiter. Entsprechend einer bevorzugten Ausgestaltung des erfindungsgemäßen Verfahrens wird der Redundanzindikator durch Einfügen eines ungültigen Datums gebildet. Mit dem erfindungsgemäßen Verfahren entfällt eine bisher übliche vollständige Pufferung von empfangenen Datenpaketen durch die Signalverarbeitungseinheit. Dies gilt auch für eine Verwaltung zwischengespeicherter Datenpakete. Erfindungsgemäß wertet eine dem Koppelelement zugeordnete Detektionseinheit Redundanzindikatoren in empfangenen Datenpaketen aus und verwirft Datenpakete mit Redundanzindikatoren. Somit erfolgt durch die Signalverarbeitungseinheit lediglich eine Kennzeichnung redundanter Datenpakete, während redundante Datenpakete Koppelelement-seitig verworfen werden.

Zueinander redundante Datenpakete werden entsprechend einer bevorzugten Ausgestaltung des erfindungsgemäßen Verfahrens durch eine einheitliche Sequenznummer gekennzeichnet. Darüber hinaus werden vorzugsweise in einer der Signalverarbeitungseinheit zugeordneten Speichereinheit Sequenznummern von bereits fehlerfrei empfangenen Datenpaketen gespeichert. Bei Empfang eines neuen Datenpakets kann die Signalverarbeitungseinheit dessen Sequenznummer damit auf Übereinstimmung mit einer bereits gespeicherten Sequenznummer auf einfache Weise überprüfen.

Vorteilhafterweise erfaßt eine dem Koppelelement zugeordnete Zählereinheit fehlerfrei und fehlerbehaftet empfangene Datenpakete. Eine Auswerteeinheit kann damit bei einer unter einem vorgebbaren Schwellwert liegenden Differenz zwischen fehlerfrei und fehlerbehaftet empfangenen Datenpaketen einen fehlerfreien redundanten Netzzustand signalisieren. Fehlerbehaftet empfangene Datenpakete werden vorzugsweise mittels einer zyklischen Redundanzprüfung ermittelt. Entsprechend einer weiteren Ausgestaltung des erfindungsgemäßen Verfahrens signalisiert die Auswerteeinheit bei einer steigenden Anzahl von fehlerfrei empfangenen Datenpaketen und einer zugleich im wesentlichen stagnierenden Anzahl von fehlerbehaftet empfangenen Datenpaketen einen Netzzustand mit Redundanzverlust. Zusätzlich kann die Auswerteeinheit beispielsweise bei einer stagnierenden Anzahl von fehlerfrei und von fehlerbehaftet empfangenen Datenpaketen einen Netzausfall signalisieren. Dies ermöglicht insgesamt eine einfache Netzzustandsdiagnose durch ein Kommunikationsgerät, wie HSR/PRP-Proxy oder HSR/PRP-RedBox.

Die vorliegende Erfindung wird nachfolgend an einem Ausführungsbeispiel anhand der Zeichnung näher erläutert. Es zeigt
- Figur 1: ein Kommunikationsgerät für ein redundant betreibbares industrielles Kommunikationsnetz,
- Figur 2: eine schematische Darstellung eines durch ein herkömmliches Kommunikationsgerät verarbeiteten Datenpaketstroms,
- Figur 3: eine schematische Darstellung eines durch das Kommunikationsgerät gemäß Figur 1 verarbeiteten Datenpaketstroms,
- Figur 4: das Kommunikationsgerät gemäß Figur 1 in einem Kommunikationsnetz mit Datenübertragung entsprechend Parallel Redundancy Protocol (PRP),
- Figur 5: das Kommunikationsgerät gemäß Figur 1 in einem Kommunikationsnetz mit Datenübertragung entsprechend High-availability Seamless Redundancy (HSR).

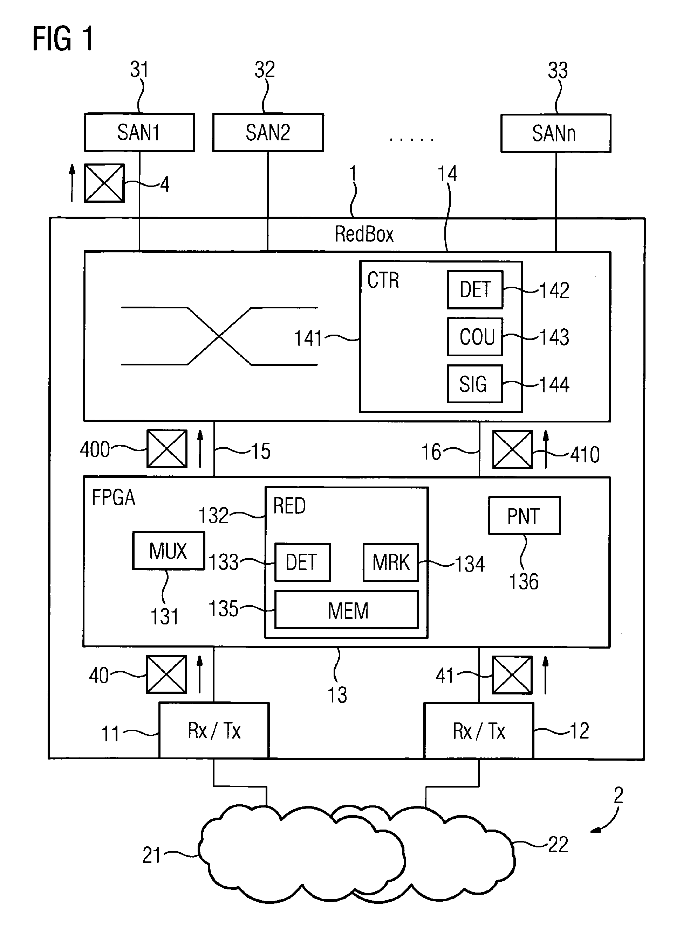

Das in Figur 1 dargestellte Kommunikationsgerät 1 für ein redundant betreibbares industrielles Kommunikationsnetz 2 umfaßt eine erste 11 und eine zweite Sende- und Empfangseinheit 12, die jeweils eine Schnittstelle für eine Netzwerkverbindung des industriellen Kommunikationsnetzes 2 aufweisen, das im vorliegenden Ausführungsbeispiel zwei Teilnetze 21 umfaßt. Zusätzlich oder alternativ dazu kann das Kommunikationsnetz 2 in einer Ringstruktur miteinander verbundene Netzknoten umfassen, die innerhalb der Ringstruktur redundant an das Kommunikationsnetz 2 angebunden sind. Innerhalb des in Figur 1 dargestellten Kommunikationsgeräts können Datenpakete entsprechend High Availability Seamless Redundancy bzw. entsprechend Parallel Redundancy Protocol übertragen werden.

Die beiden Sende- und Empfangseinheiten 11, 12 weisen eine identische Netzwerkadresse und eine identische MAC-Adresse auf. Mit der ersten und zweiten Sende- und Empfangseinheit 11, 12 ist eine durch ein Field Programmable Gate Array (FPGA) realisierte Signalverarbeitungseinheit 13 verbunden, die eine Multiplexereinheit 131 zur parallelen Weiterleitung zu sendender Datenpakete an beide Sendeeinheiten 11, 12 und eine Redundanzbehandlungseinheit 132 zur Verarbeitung von beiden Empfangseinheiten 11, 12 empfangener Datenpakete 40, 41 aufweist. Die Redundanzbehandlungseinheit 132 umfaßt eine Filtereinheit 133, die für eine Detektion empfangener redundanter Datenpakete eingerichtet ist. Über ein durch einen Backplane Switch realisiertes Koppelelement 14 sind mehrere einfach angebundene Netzknoten 31-33 mit der Signalverarbeitungseinheit 13 verbunden. Das einen zugeordneten Controller 141 aufweisende Koppelelement 14 ist über jeweils einen Interlink-Anschluß mit einem einfach angebundenen Netzknoten 31-33 verbunden. Über das Koppelelement 14 wird ein resultierendes Datenpaket 4 nach Bearbeitung durch die Redundanzbehandlungseinheit 132 an einen einfach angebundenen Ziel-Netzknoten 31 weitergeleitet. Zusätzlich weist die Signalverarbeitungseinheit 13 eine Speichereinheit 136 auf, in der eine Tabelle (proxy node table) mit Angaben zu sämtlichen mit dem Koppelelement 14 verbundenen einfach angebundenen Netzknoten 31-33 gespeichert ist.

Die mittels eines Field Programmable Gate Arrays realisierte Signalverarbeitungseinheit 13 ist über eine erste und zweite Schnittstelle 15, 16 mit dem Koppelelement 14 verbunden. Dabei ist die erste Schnittstelle 15 ausschließlich für eine Übermittlung durch die erste Empfangseinheit 11 empfangener Datenpakete 40 vorgesehen, während die zweite Schnittstelle 16 ausschließlich für eine Übermittlung durch die zweite Empfangseinheit 12 empfangener Datenpakete vorgesehen 41 ist.

Die der Signalverarbeitungseinheit 13 zugeordnete Redundanzbehandlungseinheit 132 umfaßt eine Kennzeichnungseinheit 134, die für ein Einfügen eines Redundanzindikators in ein empfangenes redundantes Datenpaket 40, 41 eingerichtet ist. Der Redundanzindikator wird durch Einfügen eines ungültigen Datums gebildet. Darüber hinaus leitet die Signalverarbeitungseinheit 13 durch beide Empfangseinheiten 11, 12 empfangene Datenpakete 40, 41 zwischenspeicherungsfrei an das Koppelelement 14 weiter. Die durch beide Empfangseinheiten 11, 12 empfangenen Datenpakete 40, 41 unterscheiden sich von an das Koppelelement 14 über die erste und zweite Schnittstelle 15, 16 weitergeleiteten Datenpaketen 400, 401 lediglich bei einem Duplikat, und zwar durch ein eingefügtes ungültiges Datum.

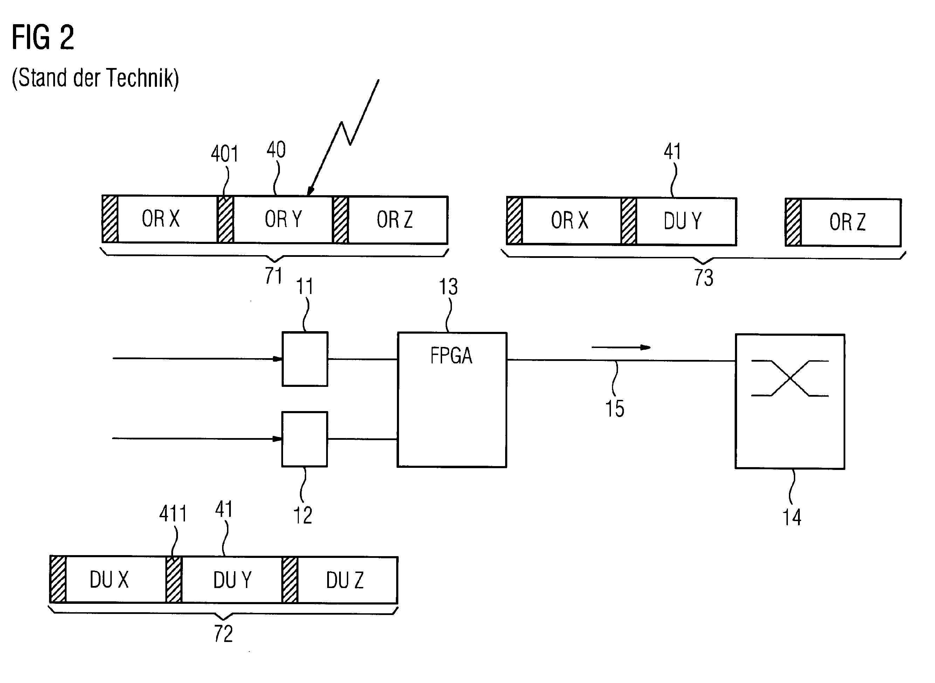

Bei dem in Figur 2 schematisch dargestellten Datenpaketstrom, der durch ein herkömmliches Kommunikationsgerät verarbeitet wird, erfolgt ein Verwerfen eines redundanten Datenpakets bereits durch die Signalverarbeitungseinheit 13. Entsprechend dem in Figur 2 dargestellten herkömmlichen Kommunikationsgerät ist die Signalverarbeitungseinheit 13 lediglich über eine Schnittstelle 15 an das Koppelelement 14 angebunden. An der ersten und zweiten Sende- und Empfangseinheit 11, 12 wird ein erster 71 bzw. zweiter eingehender Datenstrom 72 empfangen, die zueinander redundant sind und jeweils mehrere aufeinanderfolgende Datenpakete umfassen. Jedes Datenpaket liegt im vorliegenden Beispiel somit einmal als Original und als Duplikat vor. Zueinander redundante Datenpakete sind dabei durch eine einheitliche Sequenznummer gekennzeichnet.

Ist beispielsweise innerhalb des ersten Datenstroms 71 ein zweites Datenpaket 40 als Original von einem Übertragungsfehler betroffen, wird anhand der diesem Datenpaket 40 zugeordneten Sequenznummer 401 in der Signalverarbeitungseinheit 13 ein korrespondierendes Datenpaket 41 im zweiten Datenstrom 72 als Duplikat ermittelt. Dabei weist das korrespondierende Datenpaket 41 eine identische Sequenznummer 411 auf wie das vom Übertragungsfehler betroffene Datenpaket 40. In einem von der Signalverarbeitungseinheit 13 an das Koppelelement 14 gerichteten ausgehenden Datenstrom 73 wird daher das vom Übertragungsfehler betroffene Datenpaket 40 als Original durch sein korrespondierendes Datenpaket 41 als Duplikat ersetzt. Ansonsten werden von Übertragungsfehlern freie Originale der jeweiligen Datenpakete an das Koppelelement 14 weitergeleitet, während ihre Duplikate durch die Signalverarbeitungseinheit 13 verworfen werden. Für eine derartige Vorgehensweise müssen Datenpakete der beiden eingehenden Datenströme 71, 72 in der Signalverarbeitungseinheit 13 eines herkömmlichen Kommunikationsgeräts vollständig gepuffert werden.

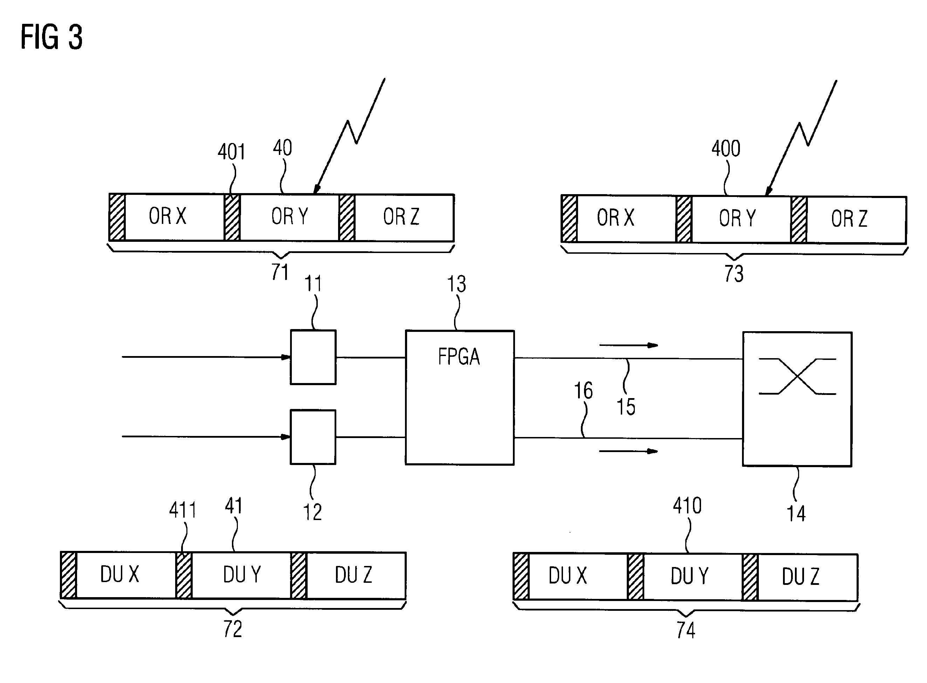

Im Gegensatz dazu erfolgt bei dem in Figur 3 schematisch dargestellten Datenpaketstrom, der durch das Kommunikationsgerät gemäß Figur 1 verarbeitet wird, ein Verwerfen eines redundanten Datenpakets erst im Koppelelement 14. Im Unterschied zu dem in Figur 2 dargestellten herkömmlichen Kommunikationsgerät ist die Signalverarbeitungseinheit 13 gemäß Figur 3 über eine erste 15 und zweite Schnittstelle 16 an das Koppelelement 14 angebunden. Auch entsprechend Figur 3 wird an der ersten und zweiten Sende- und Empfangseinheit 11, 12 ein erster 71 bzw. zweiter eingehender Datenstrom 72 empfangen, die zueinander redundant sind und jeweils mehrere aufeinanderfolgende Datenpakete umfassen. Wie zuvor sind zueinander redundante Datenpakete durch eine einheitliche Sequenznummer gekennzeichnet.

Ist bei dem in Figur 3 dargestellten Beispiel innerhalb des ersten Datenstroms 71 ein zweites Datenpaket 40 als Original von einem Übertragungsfehler betroffen, wird ebenfalls anhand der diesem Datenpaket 40 zugeordneten Sequenznummer 401 in der Signalverarbeitungseinheit 13 ein korrespondierendes Datenpaket 41 im zweiten Datenstrom 72 als Duplikat mit identischer identische Sequenznummer 411 ermittelt.

Im Unterschied zum Beispiel gemäß Figur 2 werden beide eingehenden Datenströme 71, 72 jedoch im wesentlichen unverändert als ausgehende Datenströme 73, 74 an das Koppelelement 14 weitergeleitet. Lediglich das von einem Übertragungsfehler betroffene zweite Datenpaket 40 des ersten eingehenden Datenstroms 71 erfährt eine Veränderung durch die Signalverarbeitungseinheit 14 in Form eines eingefügten ungültigen Datums. Durch dieses eingefügte ungültige Datum unterscheidet sich das zweite Datenpaket 400 des ersten ausgehenden Datenstroms 73 vom zweiten Datenpaket 40 des ersten eingehenden Datenstroms 71. Das zweite Datenpaket 41 des zweiten eingehenden Datenstroms 72 und das zweite Datenpaket 410 des zweiten ausgehenden Datenstroms 74 sind dagegen identisch.

Entsprechend dem in Figur 3 dargestellten Beispiel wird das vom Übertragungsfehler betroffene Datenpaket 400 als Original durch sein korrespondierendes Datenpaket 410 als Duplikat erst im Koppelelement 14 ersetzt. Für eine derartige Vorgehensweise ist damit keine vollständige Pufferung von Datenpaketen der beiden eingehenden Datenströme 71, 72 in der Signalverarbeitungseinheit 13 erforderlich.

Beispielsweise reicht es aus, wenn in einer der Signalverarbeitungseinheit 13 zugeordneten Speichereinheit 135 gemäß Figur 1 lediglich Sequenznummern von bereits fehlerfrei empfangenen Datenpaketen gespeichert werden. Zur Kennzeichnung empfangener redundanter Datenpakete überprüft die Signalverarbeitungseinheit 13 bei Empfang eines neuen Datenpakets dessen Sequenznummer einfach auf Übereinstimmung mit einer bereits gespeicherten Sequenznummer. Redundanzindikatoren in empfangenen Datenpaketen, wie ein ungültiges Datum, werden vorzugsweise durch eine in Figur 1 dargestellte Detektionseinheit 142 ausgewertet, die dem Controller 141 des Koppelelements 14 zugeordnet ist und Datenpakete mit Redundanzindikatoren verwirft. Dies kann beispielsweise auf Basis einer zyklischen Redundanzprüfung (cyclic redundancy check) erfolgen.

Entsprechend Figur 1 ist dem Controller 141 des Koppelelements 14 außerdem eine Zählereinheit 143 zugeordnet, die fehlerfrei und fehlerbehaftet empfangene Datenpakete erfaßt. Eine dem Controller 141 des Koppelelements 14 zugeordnete Auswerteeinheit 144 signalisiert bei einer unter einem vorgebbaren Schwellwert liegenden Differenz zwischen fehlerfrei und fehlerbehaftet empfangenen Datenpaketen einen fehlerfreien redundanten Netzzustand. Fehlerbehaftet empfangene Datenpakete werden vorzugsweise mittels einer zyklischen Redundanzprüfung ermittelt.

Bei einer steigenden Anzahl von fehlerfrei empfangenen Datenpaketen und einer zugleich im wesentlichen stagnierenden Anzahl von fehlerbehaftet empfangenen Datenpaketen signalisiert die Auswerteeinheit 144 einen Netzzustand mit Redundanzverlust. Einen Netzausfall signalisiert die Auswerteeinheit 144 bei einer stagnierenden Anzahl von fehlerfrei und von fehlerbehaftet empfangenen Datenpaketen.

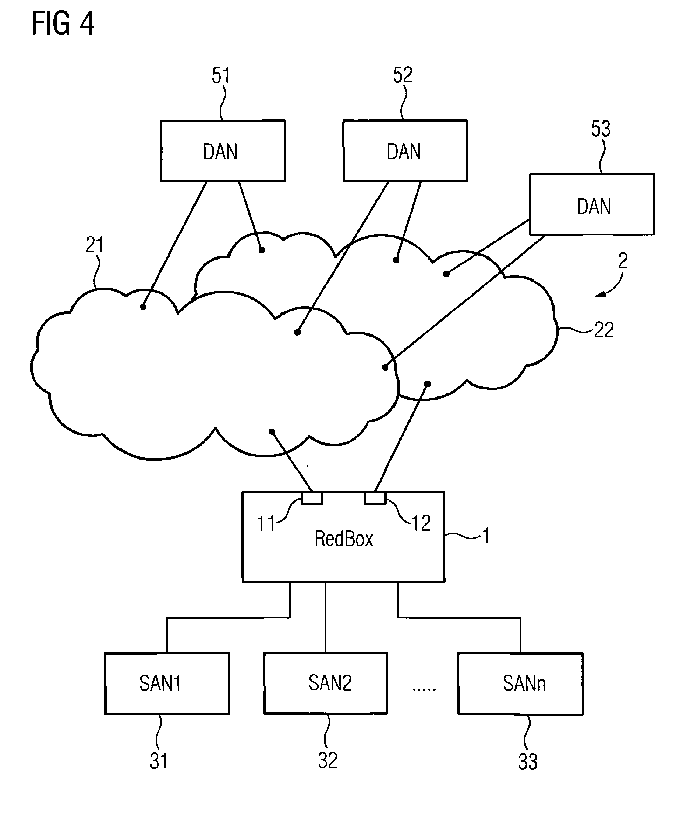

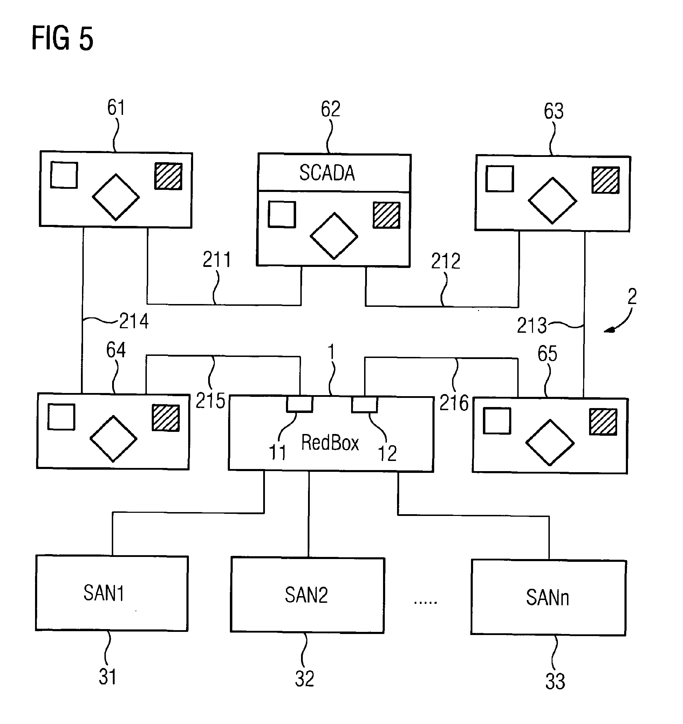

Auf Basis des in Figur 1 dargestellten Kommunikationsgeräts 1 kann entsprechend Figur 4 und 5 eine RedBox für PRP- oder HSR-Kommunikationsnetze 2 realisiert werden, in denen Datenpakete entsprechend High Availability Seamless Redundancy bzw. entsprechend Parallel Redundancy Protocol übertragen werden. Entsprechend Figur 4 ist die RedBox 1 mit ihren Sende- und Empfangseinheiten 11, 12 jeweils an ein Teilnetz 21, 22 eines PRP-Kommunikationsnetzes 2 angebunden, das mehrere doppelt angebundene PRP-Netzknoten 51-53 umfaßt. Daneben ist die RedBox 1 mit mehreren einfach angebundenen Netzknoten 31-33 verbunden.

Das in Figur 5 dargestellte HSR-Kommunikationsnetz 2 umfaßt mehrere in einer Ringstruktur über Netzwerkverbindungen 211-216 miteinander verbundene HSR-Netzknoten 61-65. Hierzu kann beispielsweise ein HSR-Netzknoten 62 zählen, der einem SCADA-System (supervisory control and data acquisition) eines industriellen Fertigungs- oder Prozeßautomatisierungssystems zugeordnet ist. In die Ringstruktur des HSR-Kommunikationsnetzes 2 kann darüber hinaus entsprechend Figur 5 auch eine RedBox 1 auf Basis des in Figur 1 dargestellten Kommunikationsgeräts 1 eingebunden sein. In diesem Fall ist die RedBox 1 mit ihren Sende- und Empfangseinheiten 11, 12 jeweils an eine Netzwerkverbindung 215, 216 des HSR-Kommunikationsnetzes 2 angebunden. Analog zur Figur 4 ist die RedBox 1 zusätzlich mit mehreren einfach angebundenen Netzknoten 31-33 verbunden.

Die Merkmale der vorangehend beschriebenen Ausführungsbeispiele können sowohl einzeln als auch in beschriebener Kombination miteinander realisiert sein.

## Patentansprüche

1. Kommunikationsgerät für ein redundant betreibbares industrielles Kommunikationsnetz mit
zumindest einer ersten (11) und einer zweiten Sende- und Empfangseinheit (12), die jeweils eine Schnittstelle für eine Netzwerkverbindung des industriellen Kommunikationsnetzes (2) aufweisen, wobei beide Sende- und Empfangseinheiten eine identische Netzwerkadresse und einen identischen Geräteidentifikator aufweisen,
- einer mit der ersten und zweiten Sende- und Empfangseinheit verbundenen Signalverarbeitungseinheit (13), die eine Multiplexereinheit (131) zur parallelen Weiterleitung zu sendender Datenpakete an beide Sendeeinheiten und eine Redundanzbehandlungseinheit (132) zur Verarbeitung von beiden Empfangseinheiten empfangener Datenpakete aufweist, wobei die Redundanzbehandlungseinheit eine Filtereinheit (133) umfaßt, die für eine Detektion empfangener redundanter Datenpakete eingerichtet ist,
- einem über ein Koppelelement (14) mit der Signalverarbeitungseinheit verbundenen einfach angebundenen Netzknoten (31-329,
**dadurch gekennzeichnet, daß**
- die Signalverarbeitungseinheit über eine erste (15) und zweite Schnittstelle (16) mit dem Koppelelement verbunden ist, wobei die erste Schnittstelle für eine Übermittlung durch die erste Empfangseinheit empfangener Datenpakete vorgesehen ist, und wobei die zweite Schnittstelle für eine Übermittlung durch die zweite Empfangseinheit empfangener Datenpakete vorgesehen ist,
- die Redundanzbehandlungseinheit eine Kennzeichnungseinheit (134) umfaßt, die für ein Einfügen eines Redundanzindikators in ein empfangenes redundantes Datenpaket eingerichtet ist, wobei die Redundanzbehandlungseinheit für ein zwischenspeicherungsfreies Weiterleiten von durch beide Empfangseinheiten empfangenen Datenpaketen an das Koppelelement eingerichtet ist,
- dem Koppelelement eine Detektionseinheit (142) zugeordnet ist, die für eine Auswertung von Redundanzindikatoren in empfangenen Datenpaketen und für ein Verwerfen von Datenpaketen mit Redundanzindikatoren eingerichtet ist.

2. Kommunikationsgerät nach Anspruch 1,
bei dem zueinander redundante Datenpakete durch eine einheitliche Sequenznummer gekennzeichnet sind, und bei dem der Signalverarbeitungseinheit eine Speichereinheit (135) zugeordnet ist, die für eine Speicherung von Sequenznummern bereits fehlerfrei empfangener Datenpakete eingerichtet ist, und bei dem die Redundanzbehandlungseinheit für eine Überprüfung auf eine bereits gespeicherte Sequenznummer bei Empfang eines neuen Datenpakets eingerichtet ist.

3. Kommunikationsgerät nach einem der Ansprüche 1 oder 2,
bei welchem dem Koppelelement eine Zählereinheit (143) zugeordnet ist, die für eine Erfassung von fehlerfrei und von fehlerbehaftet empfangenen Datenpaketen eingerichtet ist, und bei dem die Zählereinheit mit einer Auswerteeinheit (144) verbunden ist, die für eine Signalisierung eines fehlerfreien redundanten Netzzustandes bei einer unter einem vorgebbaren Schwellwert liegenden Differenz zwischen fehlerfrei und fehlerbehaftet empfangenen Datenpaketen eingerichtet ist.

4. Kommunikationsgerät nach Anspruch 3,
bei dem die Auswerteeinheit für eine Signalisierung eines Netzzustandes mit Redundanzverlust bei einer steigenden Anzahl von fehlerfrei empfangenen Datenpaketen und einer zugleich im wesentlichen stagnierenden Anzahl von fehlerbehaftet empfangenen Datenpaketen eingerichtet ist.

5. Kommunikationsgerät nach einem der Ansprüche 3 oder 4,
bei dem die Auswerteeinheit für eine Signalisierung eines Netzausfalls bei einer stagnierenden Anzahl von fehlerfrei und von fehlerbehaftet empfangenen Datenpaketen eingerichtet ist.

6. Kommunikationsgerät nach einem der Ansprüche 1 bis 5,
bei dem der Redundanzindikator durch ein eingefügtes ungültiges Datum gebildet ist.

7. Kommunikationsgerät nach Anspruch 6,
bei dem ein von einem Übertragungsfehler betroffenes Datenpaket durch die Signalverarbeitungseinheit eine Veränderung in Form eines eingefügten ungültigen Datums erfährt.

8. Kommunikationsgerät nach einem der Ansprüche 1 bis 7,
bei dem das Koppelelement ein Hochgeschwindigkeitsbus ist, und bei dem über den Hochgeschwindigkeitsbus weitere einfach angebundene Netzknoten mit der Signalverarbeitungseinheit verbunden sind.

9. Kommunikationsgerät nach einem der Ansprüche 1 bis 8,
bei dem die Signalverarbeitungseinheit mittels eines Field Programmable Gate Arrays realisiert ist, und bei dem das Koppelelement ein Backplane Switch mit zugeordnetem Controller (141) ist, und bei dem der Backplane Switch über zumindest einen Interlink-Anschluß mit dem zumindest einen einfach angebundenen Netzknoten verbunden ist.

10. Kommunikationsgerät nach einem der Ansprüche 1 bis 9,
bei dem eine Datenübertragung entsprechend High-availability Seamless Redundancy und/oder entsprechend Parallel Redundancy Protocol erfolgt.

11. Verfahren zum Betrieb eines Kommunikationsgeräts in einem redundanten industriellen Kommunikationsnetz, bei dem
- das Kommunikationsgerät (1) zumindest eine erste (11) und eine zweite Sende- und Empfangseinheit (12) umfaßt, die jeweils eine Schnittstelle für eine Netzwerkverbindung des industriellen Kommunikationsnetzes (2) aufweisen, wobei beide Sende- und Empfangseinheiten eine identische Netzwerkadresse und einen identischen Geräteidentifikator aufweisen,
- mit der ersten und zweiten Sende- und Empfangseinheit eine Signalverarbeitungseinheit (13) verbunden ist, die zu sendende Datenpakete parallel an beide Sendeeinheiten weiterleitet und von den Empfangseinheiten empfangene redundante Datenpakete detektiert,
- über ein Koppelelement (14) ein einfach angebundener Netzknoten (31-33) mit der Signalverarbeitungseinheit verbunden ist,
**dadurch gekennzeichnet, daß**
- die Signalverarbeitungseinheit über eine erste (15) und zweite Schnittstelle (16) mit dem Koppelelement verbunden ist, wobei über die erste Schnittstelle durch die erste Empfangseinheit empfangene Datenpakete übermittelt werden, und wobei über die zweite Schnittstelle durch die zweite Empfangseinheit empfangene Datenpakete übermittelt werden,
- die Signalverarbeitungseinheit in ein empfangenes redundantes Datenpaket einen Redundanzindikator einfügt und durch beide Empfangseinheiten empfangene Datenpakete zwischenspeicherungsfrei an das Koppelelement weiterleitet,
- eine dem Koppelelement zugeordnete Detektionseinheit (142) Redundanzindikatoren in empfangenen Datenpaketen auswertet und Datenpakete mit Redundanzindikatoren verwirft.

12. Verfahren nach Anspruch 11,
bei dem zueinander redundante Datenpakete durch eine einheitliche Sequenznummer gekennzeichnet werden, und bei dem in einer der Signalverarbeitungseinheit zugeordneten Speichereinheit Sequenznummern von bereits fehlerfrei empfangenen Datenpaketen gespeichert werden, und bei dem die Signalverarbeitungseinheit bei Empfang eines neuen Datenpakets dessen Sequenznummer auf Übereinstimmung mit einer bereits gespeicherten Sequenznummer überprüft.

13. Verfahren nach einem der Ansprüche 11 oder 12,
bei dem eine dem Koppelelement zugeordnete Zählereinheit (143) fehlerfrei und fehlerbehaftet empfangene Datenpakete erfaßt, und bei dem eine Auswerteeinheit (144) bei einer unter einem vorgebbaren Schwellwert liegenden Differenz zwischen fehlerfrei und fehlerbehaftet empfangenen Datenpaketen einen fehlerfreien redundanten Netzzustand signalisiert, und bei dem fehlerbehaftet empfangene Datenpakete mittels einer zyklischen Redundanzprüfung ermittelt werden.

14. Verfahren nach Anspruch 13,
bei dem die Auswerteeinheit bei einer steigenden Anzahl von fehlerfrei empfangenen Datenpaketen und einer zugleich im wesentlichen stagnierenden Anzahl von fehlerbehaftet empfangenen Datenpaketen einen Netzzustand mit Redundanzverlust signalisiert.

15. Verfahren nach einem der Ansprüche 13 oder 14,
bei dem die Auswerteeinheit bei einer stagnierenden Anzahl von fehlerfrei und von fehlerbehaftet empfangenen Datenpaketen einen Netzausfall signalisiert.

16. Verfahren nach einem der Ansprüche 11 bis 15,
bei dem der Redundanzindikator durch Einfügen eines ungültigen Datums in einen Datenrahmen gebildet wird.

17. Verfahren nach Anspruch 16,
bei dem ein von einem Übertragungsfehler betroffenes Datenpaket durch die Signalverarbeitungseinheit eine Veränderung in Form eines eingefügten ungültigen Datums erfährt.

18. Verfahren nach einem der Ansprüche 11 bis 17,
bei dem Datenpakete entsprechend High Availability Seamless Redundancy und/oder entsprechend Parallel Redundancy Protocol übertragen werden.

## Claims

1. Communication device for a redundantly operable industrial communication network comprising:
- at least one first (11) and one second transmitting and receiving unit (12) each having an interface for a network connection of the industrial communication network (2), wherein both transmitting and receiving units have an identical network address and an identical device identifier,
- a signal processing unit (13) connected to the first and second transmitting and receiving units and having a multiplexer unit (131) for the parallel forwarding of data packets to be transmitted to both transmitting units and a redundancy handling unit (132) for the processing of data packets received by both receiving units, wherein the redundancy handling unit comprises a filter unit (133) designed for detecting received redundant data packets,
- a singly linked network node (31-33) connected to the signal processing unit via a coupling element (14), **characterized in that**
- the signal processing unit is connected to the coupling element via a first (15) and second interface (16), wherein the first interface is provided for communicating data packets received by the first receiving unit, and wherein the second interface is provided for communicating data packets received by the second receiving unit,
- the redundancy handling unit comprises an identification unit (134) designed for inserting a redundancy indicator into a received redundant data packet, wherein the redundancy handling unit is designed for forwarding, in a manner free of buffer storage, data packets received by both receiving units to the coupling element,
- the coupling element is assigned a detection unit (142) designed for evaluating redundancy indicators in received data packets and for discarding data packets having redundancy indicators.

2. Communication device according to Claim 1, wherein mutually redundant data packets are identified by a uniform sequence number, and wherein the signal processing unit is assigned a storage unit (135) designed for storing sequence numbers of data packets already received without errors, and wherein the redundancy handling unit is designed for checking for an already stored sequence number upon a new data packet being received.

3. Communication device according to either of Claims 1 and 2,
wherein the coupling element is assigned a counter unit (143) designed for registering data packets received without errors and data packets received with errors, and wherein the counter unit is connected to an evaluation unit (144) designed for signaling an error-free redundant network state in the case of a difference between data packets received without errors and data packets received with errors which is below a predefinable threshold value.

4. Communication device according to Claim 3,
wherein the evaluation unit is designed for signaling a network state with redundancy loss in the case of a rising number of data packets received without errors and at the same time a substantially stagnant number of data packets received with errors.

5. Communication device according to either of Claims 3 and 4,
wherein the evaluation unit is designed for signaling a network failure in the case of a stagnant number of data packets received without errors and data packets received with errors.

6. Communication device according to any of Claims 1 to 5,
wherein the redundancy indicator is formed by an inserted invalid datum.

7. Communication device according to Claim 6,
wherein a data packet affected by a transmission error experiences a change by the signal processing unit in the form of an inserted invalid datum.

8. Communication device according to any of Claims 1 to 7,
wherein the coupling element is a high-speed bus, and wherein further singly linked network nodes are connected to the signal processing unit via the high-speed bus.

9. Communication device according to any of Claims 1 to 8,
wherein the signal processing unit is realized by means of a field programmable gate array, and wherein the coupling element is a backplane switch with assigned controller (141), and wherein the backplane switch is connected to the at least one singly linked network node via at least one interlink connection.

10. Communication device according to any of Claims 1 to 9,
wherein a data transmission is effected in accordance with high-availability seamless redundancy and/or in accordance with parallel redundancy protocol.

11. Method for operating a communication device in a redundant industrial communication network, wherein
- the communication device (1) comprises at least one first (11) and one second transmitting and receiving unit (12) each having an interface for a network connection of the industrial communication network (2), wherein both transmitting and receiving units have an identical network address and an identical device identifier,
- a signal processing unit (13) is connected to the first and second transmitting and receiving units, said signal processing unit forwarding data packets to be transmitted in parallel to both transmitting units and detecting redundant data packets received by the receiving units,
- a singly linked network node (31-33) is connected to the signal processing unit via a coupling element (14), **characterized in that**
- the signal processing unit is connected to the coupling element via a first (15) and second interface (16), wherein data packets received by the first receiving unit are communicated via the first interface, and wherein data packets received by the second receiving unit are communicated via the second interface,
- the signal processing unit inserts a redundancy indicator into a received redundant data packet and forwards data packets received by both receiving units to the coupling element in a manner free of buffer storage,
- a detection unit (142) assigned to the coupling element evaluates redundancy indicators in received data packets and discards data packets having redundancy indicators.

12. Method according to Claim 11,
wherein mutually redundant data packets are identified by a uniform sequence number, and wherein sequence numbers of data packets already received without errors are stored in a storage unit assigned to the signal processing unit, and wherein the signal processing unit, upon a new data packet being received, checks the sequence number thereof for correspondence to a sequence number already stored.

13. Method according to either of Claims 11 and 12,
wherein a counter unit (143) assigned to the coupling element registers data packets received without errors and data packets received with errors, and wherein an evaluation unit (144) signals an error-free redundant network state in the case of a difference between data packets received without errors and data packets received with errors which is below a predefinable threshold value, and wherein data packets received with errors are determined by means of a cyclic redundancy check.

14. Method according to Claim 13,
wherein the evaluation unit signals a network state with redundancy loss in the case of a rising number of data packets received without errors and at the same time a substantially stagnant number of data packets received with errors.

15. Method according to either of Claims 13 and 14,
wherein the evaluation unit signals a network failure in the case of a stagnant number of data packets received without errors and data packets received with errors.

16. Method according to any of Claims 11 to 15,
wherein the redundancy indicator is formed by inserting an invalid datum into a data frame.

17. Method according to Claim 16,
wherein a data packet affected by a transmission error experiences a change by the signal processing unit in the form of an inserted invalid datum.

18. Method according to any of Claims 11 to 17,
wherein the data packets are transmitted in accordance with high-availability seamless redundancy and/or in accordance with parallel redundancy protocol.

## Revendications

1. Appareil de communication pour un réseau de communication industriel pouvant fonctionner de manière redondante, comprenant
- au moins une première ( 11 ) et une deuxième ( 12 ) unités d'émission et de réception, qui ont respectivement une interface pour une liaison du réseau ( 2 ) de communication industriel, les deux unités d'émission et de réception ayant une adresse de réseau identique et un identificateur d'appareil identique,
- une unité ( 13 ) de traitement du signal, qui est reliée à la première et à la deuxième unités d'émission et de réception et qui a une unité ( 131 ) de multiplexage, pour l'acheminement parallèle de paquets de données à envoyer aux deux unités d'émission, et une unité ( 132 ) de traitement de redondance, pour le traitement de paquets de données reçus par les deux unités de réception, l'unité de traitement de redondance comprenant une unité ( 133 ) de filtrage, qui est conçue pour la détection de paquets de données redondants reçus,
- un noeud ( 31 à 33 ) de réseau rattaché simplement et relié à l'unité de traitement du signal par un élément ( 14 ) de couplage,
**caractérisé en ce que**
- l'unité de traitement du signal est reliée à l'élément de couplage par une première ( 15 ) et une deuxième ( 16 ) interfaces, la première interface étant prévue pour une transmission de paquets de données reçus par la première unité de réception et la deuxième interface étant prévue pour une transmission de paquets de données reçus par la deuxième unité de réception,
- l'unité de traitement de redondance comprend une unité ( 134 ) de caractérisation, qui est conçue pour une insertion d'un indicateur de redondance dans un paquet de données redondants reçus, l'unité de traitement de redondance étant conçue pour acheminer à l'élément de couplage, sans mémorisation intermédiaire, des paquets de données reçus par les deux unités de réception,
- il est associé à l'élément de couplage une unité ( 142 ) de détection, qui est conçue pour exploiter des indicateurs de redondance dans des paquets de données reçus et pour rejeter des paquets de données ayant des indicateurs de redondance.

2. Appareil de communication suivant la revendication 1,
dans lequel des paquets de données redondants l'un par rapport à l'autre sont **caractérisés par** un numéro de séquence unitaire et dans lequel, à l'unité de traitement du signal, est associée une unité ( 135 ) de mémorisation, qui est conçue pour mémoriser des numéros de séquences de paquets de données déjà reçus sans erreur, et dans lequel l'unité de traitement de redondance est conçue pour, à la réception d'un nouveau paquet de données, contrôler le numéro de séquence déjà mémorisé.

3. Appareil de communication suivant l'une des revendications 1 ou 2,
dans lequel, à l'élément de couplage, est associée une unité ( 143 ) de compteur, qui est conçue pour détecter des paquets de données reçus sans erreur et entachés d'erreurs, et dans lequel l'unité de compteur est reliée à une unité ( 144 ) d'exploitation, qui est conçue pour signaler un état de réseau redondant sans erreur pour une différence inférieure à une valeur de seuil pouvant être prescrite entre des paquets de données reçus sans erreur et entachés d'erreurs.

4. Appareil de communication suivant la revendication 3,
dans lequel l'unité d'exploitation est conçue pour signaler un état du réseau avec perte de redondance pour un nombre croissant de paquets de données reçus sans erreur et un nombre en même temps sensiblement stagnant de paquets de données reçus entachés d'erreurs.

5. Appareil de communication suivant l'une des revendications 3 ou 4,
dans lequel l'unité d'exploitation est conçue pour signaler une panne du réseau pour un nombre stagnant de paquets de données reçus sans erreur et entachés d'erreurs.

6. Appareil de communication suivant l'une des revendications 1 à 5,
dans lequel l'indicateur de redondance est formé par une donnée insérée non valable.

7. Appareil de communication suivant la revendication 6,
dans lequel un paquet de données concerné par une erreur de transmission subit, par l'unité de traitement du signal, une modification sous la forme d'une donnée insérée non valable.

8. Appareil de communication suivant l'une des revendications 1 à 7,
dans lequel l'élément de couplage est un bus à grande vitesse et dans lequel, par le bus à grande vitesse, d'autres noeuds de réseau rattachés simplement sont reliés à l'unité de traitement du signal.

9. Appareil de communication suivant l'une des revendications 1 à 8,
dans lequel l'unité de traitement du signal est réalisée au moyen d'un field programmable gate arrays et dans lequel l'élément de couplage est un backplane switch ayant une unité ( 141 ) de commande associée et dans lequel le backplane switch est relié au au moins un noeud de réseau rattaché simplement par au moins une connexion interlink.

10. Appareil de communication suivant l'une des revendications 1 à 9,
dans lequel une transmission de données s'effectue conformément à high-availability seamless redundancy et/ou conformément à parallel redundancy protocol.

11. Procédé pour faire fonctionner un appareil de communication dans un réseau de communication industriel redondant, dans lequel
- l'appareil ( 1 ) de communication comprend au moins une première ( 11 ) et une deuxième ( 12 ) unités d'émission et de réception, qui ont respectivement une interface pour une liaison du réseau ( 2 ) de communication industriel, les deux unités d'émission et de réception ayant une adresse de réseau identique et un identificateur d'appareil identique,
- à la première et à la deuxième unités d'émission et de réception, est reliée une unité ( 13 ) de traitement du signal, qui achemine, en parallèle aux deux unités d'émission, des paquets de données à envoyer et détecte des paquets de données redondants reçus par les unités de réception,
- un noeud ( 31 à 33 ) de réseau rattaché simplement et relié à l'unité de traitement du signal par un élément ( 14 ) de couplage,
**caractérisé en ce que**
- l'unité de traitement du signal est reliée à l'élément de couplage par une première ( 15 ) et par une deuxième ( 16 ) interfaces, des paquets de données reçus par la première unité de réception étant transmis par la première interface et des paquets de données reçus par la deuxième unité de réception étant transmis par la deuxième interface,
- l'unité de traitement du signal insère un indicateur de redondance dans le paquet de données redondant reçu et achemine à l'élément de couplage, sans mémorisation intermédiaire, des paquets de données reçus par les deux unités de réception,
- une unité ( 142 ) de détection associée à l'élément de couplage exploite des indicateurs de redondance dans des paquets de données reçus et rejette des paquets de données ayant des indicateurs de redondance.

12. Procédé suivant la revendication 11,
dans lequel on caractérise des paquets de données redondants l'un par rapport au l'autre par un numéro de séquence unitaire et dans lequel on mémorise, dans une unité de mémoire associée à l'unité de traitement du signal, des numéros de séquence de paquets de données déjà reçus sans erreur et dans lequel l'unité de traitement du signal contrôle, à la réception d'un nouveau paquet de données, que son numéro de séquence coïncide avec un numéro de séquence déjà mémorisé.

13. Procédé suivant l'une des revendications 11 ou 12,
dans lequel une unité ( 143 ) de compteur associée à l'élément de couplage détecte des paquets de données reçus sans erreur et entachés d'erreurs et dans lequel une unité ( 144 ) d'exploitation signale, pour une différence inférieure à une valeur de seuil pouvant être prescrite entre des paquets de données reçus sans erreur et entachés d'erreurs, un état du réseau redondant sans erreur et dans lequel on détermine des paquets de données reçus entachés d'erreurs au moyen d'un contrôle de redondance cyclique.

14. Procédé suivant la revendication 13,
dans lequel l'unité d'exploitation signale, pour un nombre croissant de paquets de données reçus sans erreur et un nombre sensiblement stagnant en même temps de paquets de données reçus entachés d'erreur, un état du réseau ayant une perte de redondance.

15. Procédé suivant l'une des revendications 13 ou 14,
dans lequel l'unité d'exploitation signale une panne du réseau pour un nombre stagnant de paquets de données reçus sans erreur et entachés d'erreurs.

16. Procédé suivant l'une des revendications 11 à 15,
dans lequel on forme un indicateur de réseau en insérant une donnée non valable dans une trame de données.

17. Procédé suivant la revendication 16,
dans lequel un paquet de données concerné par une erreur de transmission subit, par l'unité de traitement du signal, une modification sous la forme d'une donnée insérée non valable.

18. Procédé suivant l'une des revendications 11 à 17,
dans lequel on transmet des paquets de données conformément à high-availability seamless redundancy et/ou conformément à parallel redundancy protocol.
